(19) Europäisches Patentamt
European Patent Office
Office européen des brevets

(11) **EP 3 989 107 A1**

(12) **EUROPÄISCHE PATENTANMELDUNG**

(43) Veröffentlichungstag:
**27.04.2022 Patentblatt 2022/17**

(21) Anmeldenummer: **20209088.2**

(22) Anmeldetag: **20.11.2020**

(51) Internationale Patentklassifikation (IPC):
**G06K 9/00** *(2022.01)*

(52) Gemeinsame Patentklassifikation (CPC):
**G06V 20/64; G06V 20/10; G06V 20/13**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **22.10.2020 DE 102020127797**

(71) Anmelder:
• **Garcia, Markus**
  **8834 Schindellegi (CH)**
• **Zellweger, Thomas**
  **3629 Oppligen (CH)**

(72) Erfinder:
• **Garcia, Markus**
  **8834 Schindellegi (CH)**
• **Zellweger, Thomas**
  **3629 Oppligen (CH)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

Bemerkungen:
Geänderte Patentansprüche gemäss Regel 137(2) EPÜ.

(54) **SENSORVERFAHREN ZUM PHYSIKALISCHEN, INSBESONDERE ZUM OPTISCHEN, ERFASSEN ZUMINDEST EI-NES NUTZUNGSOBJEKTES, INSBESONDERE ZUR DETEKTION EINER UMGEBUNG ZUR ERZEUGUNG, INSBE-SONDERE EINES SICHERHEITSABSTANDES ZWISCHEN OBJEKTEN**

(57) Die Erfindung betrifft ein Sensorverfahren zum physikalischen, insbesondere zum optischen, Erfassen zumindest eines Nutzungsobjektes, insbesondere zur Detektion einer Umgebung zur Erzeugung, insbesondere eines Sicherheitsabstandes zwischen Objekten, umfassend das Bereitstellen des Nutzungsobjektes, die Durchführung zumindest zweier optischer, insbesondere zweidimensionaler, Sensor-Aufnahmen des Nutzungsobjekts, wobei die Aufnahmen aus jeweils unterschiedlichen Winkeln und/oder unterschiedlichen Positionen relativ zum Nutzungsobjekt geschossen werden. Wobei in einem weiteren Schritt ein Bereitstellen zumindest einer Verarbeitungseinheit, mittels welcher das Nutzungsobjekt und/oder ein dem Nutzungsobjekt eindeutig, vorzugsweise eineindeutig, zugeordnetes Identifikationsmittel physikalisch erfasst wird, woraus zumindest ein Kennwert des Nutzungsobjektes gewonnen wird, insbesondere sodass der Sicherheitsabstand zwischen zwei benachbarten Objekten, insbesondere Nutzungsobjekten, eingehalten wird.

**Fig. 1**

EP 3 989 107 A1

**Beschreibung**

Die vorliegende Anmeldung betrifft ein Sensorverfahren zum physikalischen, insbesondere zum optischen, Erfassen zumindest eines Nutzungsobjektes, insbesondere zur Detektion einer Umgebung zur Erzeugung, insbesondere eines Sicherheitsabstandes zwischen Objekten. Bisherige Methoden zur Abstandserkennung zwischen Benachbarten Nutzungsobjekten und zur Zuordnung eines Nutzungsobjekts zu einer Nutzungsobjektklasse sind zwar kostengünstig, jedoch recht ungenau. In der Regel wird hierzu eine Fotografie eines Nutzungsobjekts gemacht, um dies anhand deren strukturellen und/oder haptischen Merkmale identifizieren zu können

Eine Lösung des vorstehenden Problems bildet daher der hierbei beanspruchte und vorgestellte Patentanspruch 1.

Es ist daher eine Aufgabe der vorliegenden Erfindung, ein Sensorverfahren zum physikalischen, insbesondere zum optischen, Erfassen zumindest eines Nutzungsobjektes, insbesondere zur Detektion einer Umgebung zur Erzeugung, insbesondere eines Sicherheitsabstandes zwischen Objekten anzubieten, welches nicht nur kostengünstig und zeitsparend ist, sondern zudem eine ganz besonders hohe Genauigkeit in der Berechnung eines Sicherheitsabstandes zwischen zwei Nutzungsobjekten, zum Beispiel zweier Fahrzeuge, insbesondere während des Straßenverkehrs, anzubieten.

Gemäß zumindest einer Ausführungsform umfasst das hier vorgestellte Sensorverfahren zum physikalischen, insbesondere zum optischen, Erfassen zumindest eines Nutzungsobjektes, insbesondere zur Detektion einer Umgebung zur Erzeugung, insbesondere eines Sicherheitsabstandes zwischen Objekten zumindest ein Bereitstellen eines Nutzungsobjektes. Bei dem Nutzungsobjekt kann es sich generell um ein, einer Nutzung zugeführtes oder zuzuführendes oder einer Nutzung enthaltenes, Objekt, insbesondere dreidimensionales Objekt handeln. Dabei bedeutet der Begriff "nutzen" im Sinne der Anmeldung jedwede Handhabung hinsichtlich eines Zweckes.

Gemäß zumindest einer Ausführungsform wird insbesondere in einem zweiten Schritt die Durchführung zumindest zweier optischer, insbesondere zweidimensionaler, Sensor-Aufnahmen des Nutzungsobjekts, wobei die Aufnahmen aus jeweils unterschiedlichen Winkeln und/oder unterschiedlichen Positionen relativ zum Nutzungsobjektgeschossen werden, sodass eine Nutzungsobjektbildsammlung des Nutzungsobjekts entsteht und ausgehend von der Nutzungsobjektbildsammlung und unter Verwendung der optischen Aufnahmen durch eine Implementierungsvorrichtung zumindest ein, dreidimensionales Bild des Nutzungsobjekts, beispielsweise auch von dessen Umgebung, erzeugt wird, insbesondere wobei in einem weitere Schritt ein Bereitstellen zumindest einer Verarbeitungseinheit, mittels welcher das Nutzungsobjekt und/oder ein dem Nutzungsobjekt eindeutig, vorzugsweise eineindeutig, zugeordnetes Identifikationsmittel physikalisch erfasst wird, woraus zumindest ein Kennwert des Nutzungsobjektes gewonnen wird, insbesondere sodass der Sicherheitsabstand zwischen zwei benachbarten Objekten, insbesondere Nutzungsobjekten, eingehalten wird.

Gemäß zumindest einer Ausführungsform ist das dreidimensionale Bild ein Näherungsbild, welches durch die im Wesentlichen exakt abgebildeten zweidimensionalen Aufnahmen sowie durch bildliche Übergangsbereiche gebildet ist, wobei die Übergangsbereiche die zweidimensionalen Aufnahmen verbinden, sodass das dreidimensionale Bild entsteht.

Gemäß zumindest einer Ausführungsform sind die Übergangsbereiche in optischer Hinsicht eine pixelartige (Misch-)Darstellung zweier unmittelbar benachbarter Randbereiche der zweidimensionalen Aufnahmen, wobei ein Übergangsbereich als scharf abgrenzbare Trennlinie zwischen den beiden zweidimensionalen Aufnahmen ausgebildet ist. In diesem Zusammenhang kann "scharf" bedeuten, dass der Übergangsbereich entlang einer durchgehenden Linie aus zumindest einer Pixellinie besteht. Das kann heißen, dass zur Verbindung der beiden Bilder entlang der Linie ein Pixel und das vorhergehende Pixel folgt, in der Breite jedoch stets entlang der Linie, also der Verbindungslinie, lediglich ein Pixel angeordnet ist. Ein solcher Übergang kann daher im Sinne der Anmeldung als scharf oder kantenartig bezeichnet werden.

Gemäß zumindest einer Ausführungsform wird jede zweidimensionale Aufnahme in einzelne Daten, vorzugsweise Datenklassen, zerlegt und anhand dieser Datenklassenerzeugung werden die Datenklassen zu dem dreidimensionalen Bild zusammengesetzt, insbesondere mittels einer KI-Maschine.

Im Sinne der Anmeldung bedeutet eine "KI-Maschine" eine solche Maschine, zum Beispiel eine solche Vorrichtung, welche eine KI-Entität aufweist. Künstliche Intelligenz ist eine Entität (oder ein kollektiver Satz von kooperativen Entitäten), die in der Lage ist, Eingaben zu empfangen, zu interpretieren und daraus zu lernen und verwandte und flexible Verhaltensweisen und Handlungen zu zeigen, die der Entität helfen, ein bestimmtes Ziel oder eine bestimmte Zielsetzung über einen bestimmten Zeitraum zu erreichen.

Die KI-Maschine ist in zumindest einer Ausführungsform dazu eingerichtet und dafür vorgesehen, dass im Falle einer Unterschreitung eines Sicherheitsabstandes ein Alarm ausgelöst wird. Hierzu kann auch bereits nur ein kleiner Teil der Betrachtung der aufgenommenen Daten dienen, denn die KI lernt dann vollautomatisch, aus der Vergangenheit, welche Abmessungen das Nutzungsobjekt hat und ab wann ein Sicherheitsabstand unterschritten ist

Gemäß zumindest einer Ausführungsform werden die Datenklassen zu Datenklassenpunktwolken zusammengesetzt, um so das dreidimensionale Bild zu erzeugen.

Gemäß zumindest einer Ausführungsform, kann mittels der Datenklassen unterschiedlicher Punktwolken ein Abstand der Punktwolken und somit nicht die Abmessungen des Nutzungsobjekts selbst errechnet werden, sondern es ist unabhängig davon auch möglich Punktwolken benachbarter Fahrzeuge zu verwenden, um Benachbarungsabstände, das heißt Sicherheitsabstände, zu berechnen. Zur Berechnung der Abstände zweier benachbarter Punktwolken, können jeweils die Orte höchster Punktdichte beider Wolken als Abstand zweier Punktwolken dienen.

Die Art und Weise eine dreidimensionale Ansicht von einem Objekt zu erzeugen ist auf verschiedenste Arten möglich. Die Entwicklung der Photogrammetrie schreitet hierbei immer weiter voran. In zumindest einer möglichen Ausführungsform ist das, insbesondere vollautomatische, Erzeugen von hochdichten Punktwolken aus frei aufgenommenen Fotos, zum Beispiel der hier beschriebenen zweidimensionalen Aufnahmen. Selbst bei farblich kaum unterscheidbaren Flächen reichen kleinste Texturunterschiede am Objekt aus, um fast rauschfreie und detaillierte 3D Punktwolken zu erzeugen. Die hochgenauen und hochdetaillierten Modelle haben nahezu Laserscanqualität.

Zur Erzeugung der 3D-Punktwolken werden zweidimensionale Aufnahmen verschiedener Ansichten des Nutzungsobjektes aufgenommen. Aus den darauf gewonnen Daten kann nun, insbesondere vollautomatisch die Standpunkte der Bilder zum Zeitpunkt der Aufnahme erstellt werden, dabei kann der Sensor die Kamera kalibrieren und berechnet schlussendlich eine 3D-Punktwolke des Nutzungsobjektes, insbesondere in nahezu Laserscanqualität.

Im nächsten Schritt kann anhand natürlicher Punkte, wie beispielsweise die Ecken oder Ränder des Nutzungsobjektes, und mindestens einer bekannten Strecke, wie etwa einer Wandlänge, ein Koordinatensystem definiert werden. Verfügen die Bilder über GPS-Informationen, wie bei Fotos von Drohnen, kann die Definition des Koordinatensystems durch die Georeferenzierung gänzlich automatisch geschehen.

Anschließend besteht die Möglichkeit die Punktwolke noch in ihrer Randbegrenzungen zu definieren. Somit stören keine unnötigen Elemente, welche zum Beispiel im Hintergrund der Fotos zu sehen waren, bei der weiteren Nutzung der Punktwolke. Diese Abgrenzungen sind vergleichbar mit einer Clipping-Box.

Generell ist zu der Erstellung einer Punktwolke mittels Photogrammetrie zu sagen: Je besser die Qualität der Fotos in Bezug auf die Auflösung und die Ansichten des Objektes - umso besser und detaillierter wird die Punktwolke erzeugt. Ähnliches gilt auch für die Gesamtheit der Punktwolke - werden rein die Außenansichten eines Gebäudes fotografiert, so erhält man eine Punktwolke einer Gebäudehülle. Für eine Punktwolke mit Außen- und Innenansichten benötigt die Software zusätzlich Bildmaterial von den Räumlichkeiten sowie einer Verbindung zwischen innen und außen. Eine solche Verbindung ist etwa eine fotografierte Türschwelle - so kann der Bezug über sogenannte Verknüpfungspunkte erkannt werden. Das Ergebnis ist ein Nutzungsobjekt, welches mit Außenansichten samt inneren Räumlichkeiten in der Punktwolke ganzheitlich wiedergegeben wird.

Ist nun eine Punktwolke vom Objekt erstellt, kann dieses graphisch auf einem Bildschirm dargestellt werden. Punktwolken können den hier beschriebenen Datenklassen entsprechen. Je eine Punktpunktwolke kann dann einer, vorzugsweise genau einer Datenklasse zugeordnet werden. Auch kann einer Datenklasse zwei oder mehr Punktwolken oder umgekehrt zwei Datenklassen einer Punktwolke zugeordnet sein.

Bei dem Kennwert kann es sich um eine reelle Zahl größer 0 handeln, vorstellbar ist jedoch auch, dass sich der Kennwert aus verschiedenen Teilkennwerten zusammensetzt. Ein Nutzungsobjekt kann daher zum Beispiel im Hinblick auf eine Außenfarbe einen Teilkennwert aufweisen, im Hinblick auf Maximalabmessungen in Höhe und Breite und/oder Tiefe einen weiteren Kennwert, sowie in Hinblick auf Gewicht einen weiteren Teilkennwert. Zum Beispiel kann daher ein solcher Kennwert durch die Kombination dieser drei Teilkennwerte gebildet sein. Eine Kombination kann in Form einer Summe oder eines Bruches stattfinden. Vorzugsweise ist der Kennwert jedoch in Form einer Summe aus den vorgenannten Teilkennwerten bestimmt. Die einzelnen Teilkennwerte können jedoch auch mit unterschiedlicher Gewichtung in die Aufsummierung einbezogen werden. Hierzu ist es vorstellbar, dass jeder Teilkennwert als Gewichtsfaktor einen ersten Gewichtsfaktor, der zweite Teilkennwert mit einem zweiten Gewichtsfaktor und ein dritter Teilkennwert mit einem dritten Gewichtsfaktor aufweist gemäß der Formel:

$$K = G1 * K1 + G2 * K2 + G3 * K3,$$

wobei die Werte K1 bis K3 die jeweiligen Teilwerte darstellen und die Faktoren G1 bis G3 (welche reelle positive Zahlen darstellen) jeweilig Gewichtsfaktoren der Teilkennwerte bezeichnen. Bei der hier vorgestellten Nutzungsobjektklassifikation kann es sich um einen rein optischen Vergleich zwischen dem mit einer obig genannten Kamera aufgenommenen Nutzungsobjekt und einer in optischer Weise entsprechend hinterlegten Nutzungsobjektvorlage in einer Datenbank handeln.

Gemäß zumindest einer Ausführungsform wird die Nutzungsobjektklassifikation insofern durchgeführt, als dass der Kennwert mit zumindest einem in einer Datenbank der Verarbeitungseinheit und/oder mit einer Datenbank einer externen CPU verglichen wird, und die Verarbeitungseinheit und/oder die CPU und/oder der Nutzer selbst, ein dem Kennwert entsprechendes Datenbankobjekt auswählt und in einem Bildschirm der Verarbeitungseinheit darstellt, sodass ein Kamerabild des Nutzungsobjektes zusammen mit dem Datenbankobjekt zumindest teilweise optisch auf dem Bildschirm überlagert und/oder nebeneinander dargestellt wird, insbesondere und weiter wobei eine Durchführung zumindest eines physikalischen Erfassungsvorgangs, zum Beispiel durch einen Nutzer und/oder einer Durchführungsvorrichtung, insbesondere zumindest einer Fotographie, des Nutzungsobjektes, sodass das Nutzungsobjekt derart erfasst wird, dass eine durch den Erfassungsvorgang erfasste Abbildung des Nutzungsobjektes identisch oder maßstabsskaliert identisch mit dem auf dem Bildschirm dargestellten Datenbankobjekt zeitgleich dargestellt wird, wobei durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zugeordnet wird.

Gemäß zumindest einer Ausführungsform umfasst der physikalische Erfassungsvorgang zumindest eine zeitliche Erfassungssequenz, wobei während der Erfassungssequenz zumindest zwei verschiedene Aufnahmen des Nutzungsobjektes durchgeführt werden, wobei jeder Aufnahme zumindest ein Datenbankobjekt zugeordnet ist.

Gemäß zumindest einer Ausführungsform wird nach der kennwertmäßigen Erfassung und zur Nutzungsobjektklassifikation auf dem Bildschirm zumindest eine zeitlich sequentielle Erfassungsanleitung der zeitlichen Erfassungssequenz zur Erfassung der zumindest zwei Aufnahmen abgefahren.

Zum Beispiel erfasst die Erfassungssequenz eine Anleitung an eine Durchführungsvorrichtung und/oder an einen Nutzer, das Nutzungsobjekt unter verschiedenen Winkeln, verschiedenen Abständen mit verschiedenen Farbkontrasten oder ähnlichem zu fotografieren, um eine Identifikation mit einem in der Datenbank hinterlegten Nutzungsobjekt zu vereinfachen.

Denkbar ist, dass es sich bei dem Nutzungsobjekt um ein Fahrzeug, beispielsweise einen 3er BMW handelt. Das Nutzungsobjekt selber kann zum Beispiel einen Spoiler aufweisen und/oder auch tiefer gelegt sein. Ist nun ein entsprechendes Nutzungsobjekt nicht auch mit einem zusätzlichen Spoiler und einer tiefer gelegten Version in der Datenbank hinterlegt, sondern weist die Datenbank lediglich generell ein Basismodell eines 3er BMWs auf, kann die Verarbeitungseinheit und/oder die Datenbank und/oder die externe CPU trotzdem dieses Basis-3er-Modell als nächstliegende Übereinstimmung mit dem Nutzungsobjekt auswählen, zum Beispiel auch deshalb weil die Kennwerte des Nutzungsobjektes beispielsweise anhand einer Fahrzeugplakette identisch sind.

Mit der oben genannten Nutzungsobjektklassifikation in Verbindung mit der entsprechenden Durchführung auf Basis des physikalischen Erfassungsvorgangs kann daher erreicht sein, dass durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zugeordnet wird.

Bei dem Fahrzeugtypen kann es sich wie obig bereits beschrieben zum Beispiel um einen BMW der 3er-Klasse oder um jeden anderen auf den deutschen Straßen oder dem internationalen Straßensystem zugelassenes Fahrzeug handeln.

Gemäß mindestens einer Ausführungsform erfolgt nach der kennwertmäßigen Erfassung und zum Nutzungsobjekt Klassenidentifikation auf dem Bildschirm zumindest eine zeitlich sequentielle Erfassungsanleitung der zeitlichen Erfassungssequenz die Erfassung zumindest zweier Aufnahmen. Insbesondere wird ein derartiger Verfahrensschritt entlang dieser seitlichen Erfassungssequenz abgefahren. Die Erfassungssequenz kann daher im Hinblick auf den Ort, auf eine Aufnahmehelligkeit oder ähnliches genaue Anleitungen an den Nutzer und/oder eine Durchführungsvorrichtung aufweisen, sodass entlang vorgegebener Punkte die Verarbeitungseinheit, welche vorzugsweise eine optische Kamera umfasst, das Nutzungsobjekt optisch abwehrt.

Zur genaueren Orientierung an speziellen Orientierungspunkten des Nutzungsobjekts kann an dem Nutzungsobjekt zumindest ein, vorzugsweise jedoch mehrere Orientierungspunkte vorzugsweise auch lösbar angebracht sein. Solche Orientierungspunkte können Markierungselemente sein, welche die Kamera der Verarbeitungseinheit besonders einfach aufnehmen kann. Beispielsweise handelt es sich bei den Markierungselementen um Bar- oder Strichcodes und/oder um NFC-Chips.

Derartige Markierungselemente können daher auch passive Bauelemente sein. Denkbar ist jedoch auch, dass solche Markierungselemente lösbar auf das Nutzungsobjekt aufgebracht, zum Beispiel aufgeklebt werden können. Solche Nutzungsobjekte können eine eigene Energieversorgung, beispielsweise eine Batterieversorgung, aufweisen. Solche mit einer Batterie versehenden Markierungselemente können im optisch sichtbaren oder im unsichtbaren, zum Beispiel Infrarot- oder Mikrowellenbereich elektromagnetische Strahlen aussenden, welche von einem Ortungselement der Verarbeitungseinheit detektiert werden können und wodurch die Verarbeitungseinheit dazu in der Lage ist, festzustellen, in welcher Position es sich relativ zu dem Nutzungsobjekt befindet.

Alternativ oder zusätzlich ist jedoch auch vorstellbar, dass die Markierungselemente virtuelle Markierungselemente sind, welche aus der Datenbank geladen werden und welche ebenso wie das Nutzungsobjekt selbst aus der Datenbank als Bild, beispielsweise als ein drittes Bild zusammen mit einer Fotografie des Nutzungsobjekts und dementsprechend virtuell aus der Datenbank geladenen Erscheinung des Nutzungsobjekts auf dem Bildschirm des Nutzungsobjektes dargestellt werden, können daher ebenso wie die Datenbankobjekte (welche die Nutzungsobjekte in virtueller Hinsicht abbilden können und welche in der Datenbank gespeichert sind), ebenso als weitere Datenbankobjekte in der Datenbank der Verarbeitungseinheit und/oder der externen CPU hinterlegt sein. Zum Beispiel kann mit ein und demselben Kennwert sowohl das Nutzungsobjekt) also auch das weitere Datenbankobjekt (zumindest ein Markierungselement) gemeinsam in die Verarbeitungseinheit geladen und/oder auf dem Bildschirm der Verarbeitungseinheit dargestellt werden.

Gemäß zumindest einer Ausführungsform ist der Kennwert eines Identifikationsmittels, zum Beispiel einer Nutzungsplakette des Nutzungsobjektes, entnommen, insbesondere gescannt. Der Kennwert wird daher ebenso vorzugsweise vollautomatisch von der Verarbeitungseinheit, welche zum Beispiel eine optische Kamera aufweist, aufgenommen. Vorzugsweise ist es für den Benutzer und/oder die Durchführungsvorrichtung nicht mehr nötig, den Kennwert manuell in die Verarbeitungseinheit eingeben zu müssen.

Gemäß zumindest einer Ausführungsform umfasst oder ist die Verarbeitungseinheit ein Smartphone oder eine Kamera. Ist die Verarbeitungseinheit ein Smartphone oder eine Kamera, kann diese wie obig bereits erwähnt, händisch handhabbar sein.

Gemäß zumindest einer Ausführungsform ist die Verarbeitungseinheit an einem Aufnahmeelement befestigt, welches sich entsprechend den Vorgaben durch die Erfassungssequenz relativ zu dem Nutzungsobjekt bewegt. Die Verarbeitungseinheit kann sich daher mit dem Aufnahmeelement zusammen entsprechend der Erfassungssequenz relativ zu dem Nutzungsobjekt bewegen. Zwar kann in einem derartigen Fall die Verarbeitungseinheit ein Smartphone oder eine Kamera sein oder umfassen und die Verarbeitungseinheit kann trotzdem auch eine handhabbare Verarbeitungseinheit sein. Dies ist jedoch an einer größeren Einheit, nämlich dem Aufnahmeelement befestigt. Vorzugsweise umfasst das Aufnahmeelement alle nötigen Komponenten, um sich vollautomatisch oder durch manuelle Kraft des Nutzers entlang des Nutzungsobjekts bewegen zu lassen.

Gemäß zumindest einer Ausführungsform handelt es sich bei dem Aufnahmeelement um eine Drohne, welche entsprechend der Erfassungssequenz relativ zu dem Nutzungsobjekt gelenkt wird, um die einzelnen Aufnahmen vorzugsweise entlang oder an den oben genannten Markierungselementen durchführen zu können.

Im Sinne der Erfindung kann es sich bei einer "Drohne" um ein unbemanntes Fahrzeug, vorzugsweise um ein unbemanntes Fluggerät mit einem oder mehreren Helikopterrotoren handeln. Die Drohne kann dann kabellos oder kabelgebunden über eine Steuereinrichtung von dem Nutzer und/oder von der Durchführungsvorrichtung manuell oder auch voll automatisch gesteuert und damit gelenkt werden.

Mittels der Drohne ist es insofern möglich, dass bei einer Aufnahme des Nutzungsobjekts um das Nutzungsobjekt herum sehr platzsparend vorgegangen werden kann. Insbesondere kann auf einen Sicherheitsabstand des Nutzungsobjekts zu anderen Nutzungsobjekten, beispielsweise anderen Autos eines Autosalons verzichtet sein, sodass die Drohne vorzugsweise schwebend die einzelnen zu fotografierenden Positionen entsprechend der Ermittlungssequenz abfährt, ohne dass andere nicht beteiligte Nutzungsobjekte sehr weit weggefahren werden müssten. Die Drohne würde dann einfach von oben sich dem Nutzungsobjekt nähern und beispielsweise auch in das Interieur des Autos hineinfahren, um auch Innenaufnahmen aufnehmen zu können.

Gemäß zumindest einer Ausführungsform umfasst die Erfassungssequenz ebenso Steuerungsdaten zur Flughöhe der Drohne, sodass die Drohne in seitlicher Hinsicht, vorzugsweise vollautomatisch die Erfassungssequenz abfliegt. Ist einmal beispielsweise anhand der obig genannten Markierungselemente eine bestimmte Erfassungssequenz, die von dem Nutzer und/oder Durchführungsvorrichtung vorgegeben sein kann, durch die Verarbeitungseinheit aufgerufen, kann ein vollautomatischer Prozess ablaufen, an dessen Ende die eindeutige bzw. vorzugsweise die eineindeutige Identifikation des Nutzungsobjekts mit einem in der Datenbank hinterlegten Nutzungsobjekt stehen kann.

Gemäß zumindest einer Ausführungsform umfasst die Sensorvorrichtung zum physikalischen, insbesondere zum optischen, Erfassen zumindest eines Nutzungsobjektes, insbesondere zur Detektion einer Umgebung zur Erzeugung, insbesondere eines Sicherheitsabstandes zwischen Objekten das Bereitstellen des Nutzungsobjektes sowie zumindest eine Aufnahmeeinheit zur Durchführung zumindest zweier optischer, insbesondere zweidimensionaler, Sensor-Aufnahmen des Nutzungsobjekts, wobei die Aufnahmen aus jeweils unterschiedlichen Winkeln und/oder unterschiedlichen Positionen relativ zum Nutzungsobjekt geschossen sind, sodass eine Nutzungsobjektbildsammlung des Nutzungsobjekts entsteht, wobei mittels einer Implementierungsvorrichtung ausgehend von der Nutzungsobjektbildsammlung und unter Verwendung der optischen Aufnahmen zumindest ein, dreidimensionales Bild des Nutzungsobjekts, beispielsweise auch von dessen Umgebung, erzeugbar ist, insbesondere wobei mittels einer Verarbeitungseinheit mittels welcher das Nutzungsobjekt und/oder ein dem Nutzungsobjekt eindeutig, vorzugsweise eineindeutig, zugeordnetes Identifikationsmittel physikalisch erfassbar ist, woraus zumindest ein Kennwert des Nutzungsobjektes gewinnbar ist, insbesondere sodass der Sicherheitsabstand zwischen zwei benachbarten Objekten, insbesondere Nutzungsobjekten, einhaltbar ist.

Dabei weist die hier beschriebene Vorrichtung die gleichen Merkmale auf, wie das hier beschriebene Verfahren und umgekehrt.

Ein Aspekt der Erfindung kann zudem sein, dass mittels der Verarbeitungseinheit und/oder der CPU zumindest ein physikalischer Erfassungsvorgang, insbesondere zumindest eine Fotografie des Nutzungsobjektes auf Basis des auf dem Bildschirm abgebildeten Datenbank, durchführbar ist, sodass der Nutzer das Nutzungsobjekt derart erfasst, dass eine durch den Erfassungsvorgang erfasste Abbildung des Nutzungsobjektes identisch oder maßstabskaliert identisch mit dem auf dem Bildschirm dargestellten Datenbankobjekt zeitgleich dargestellt wird, wobei durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zuordenbar wird.

Die weiteren Ausgestaltungen der obig beschriebenen Vorrichtung können in derselben Art und Weise, insbesondere mit denselben Merkmalen wie das obig beschriebene Verfahren dargelegt sein.

Weitere Vorteile und Ausführungsformen ergeben sich aus den beigefügten Zeichnungen. Darin zeigen:

Fig.1 bis 2C sowohl eine Sensorvorrichtung als auch ein Sensorverfahren gemäß der hier beschriebenen Erfindung;

Fig. 3A -3E eine weitere Ausführungsform des hier beschriebenen Sensorverfahrens.

In den Figuren sind gleiche oder gleich wirkende Bestandteile jeweils mit den gleichen Bezugszeichen versehen.

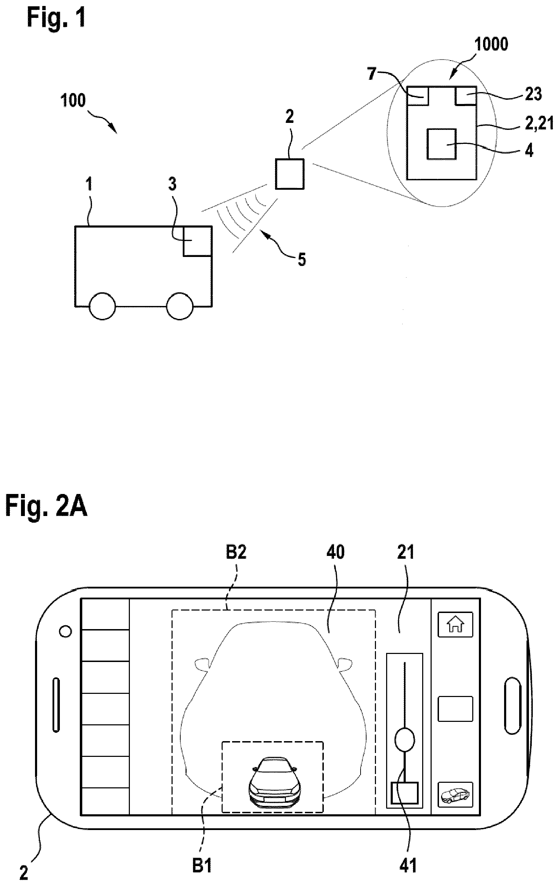

In der Figur 1 ist ein erfindungsgemäßes Sensorverfahren 1000 sowie eine erfindungsgemäße Sensorvorrichtung 100 gezeigt, wobei das Sensorverfahren 1000 dazu eingerichtet und vorgesehen ist, ein Nutzungsobjekt 1 in physikalischer Hinsicht insbesondere optisch zu erfassen.

Wie aus der Figur 1 hervorgeht, umfasst das Sensorverfahren 1000 zumindest ein Bereitstellen eines Nutzungsobjektes 1. Bei dem Nutzungsobjekt 1 kann es sich generell um ein, einer Nutzung zugeführtes oder zuzuführendes oder einer Nutzung enthaltenes, Objekt, insbesondere dreidimensionales Objekt handeln. Dabei bedeutet der Begriff "nutzen" im Sinne der Anmeldung jedwede Handhabung hinsichtlich eines Zweckes.

In einem zweiten Schritt wird insbesondere die Durchführung zumindest zweier optischer, insbesondere zweidimensionaler, Sensor-Aufnahmen des Nutzungsobjekts 1, wobei die Aufnahmen aus jeweils unterschiedlichen Winkeln und/oder unterschiedlichen Positionen relativ zum Nutzungsobjekt 1 geschossen werden durchgeführt, sodass eine Nutzungsobjektbildsammlung des Nutzungsobjekts 1 entsteht und ausgehend von der Nutzungsobjektbildsammlung und unter Verwendung der optischen Aufnahmen durch eine Implementierungsvorrichtung 7 zumindest ein, dreidimensionales Bild 30 des Nutzungsobjekts 1, beispielsweise auch von dessen Umgebung, erzeugt wird, insbesondere wobei in einem weitere Schritt ein Bereitstellen zumindest einer Verarbeitungseinheit 2, mittels welcher das Nutzungsobjekt 1 und/oder ein dem Nutzungsobjekt 1 eindeutig, vorzugsweise eineindeutig, zugeordnetes Identifikationsmittel 11 physikalisch erfasst wird, woraus zumindest ein Kennwert 3 des Nutzungsobjektes 1 gewonnen wird, insbesondere sodass der Sicherheitsabstand zwischen zwei benachbarten Objekten, insbesondere Nutzungsobjekten 1, eingehalten wird.

Bei dem Kennwert 3 kann es sich um eine reelle Zahl größer 0 handeln, vorstellbar ist jedoch auch, dass sich der Kennwert 3 aus verschiedenen Teilkennwerten zusammensetzt. Ein Nutzungsobjekt 1 kann daher zum Beispiel im Hinblick auf eine Außenfarbe einen Teilkennwert aufweisen, im Hinblick auf Maximalabmessungen in Höhe und Breite und/oder Tiefe einen weiteren Kennwert 3, sowie in Hinblick auf Gewicht einen weiteren Teilkennwert. Zum Beispiel kann daher ein solcher Kennwert 3 durch die Kombination dieser drei Teilkennwerte gebildet sein. Eine Kombination kann in Form einer Summe oder eines Bruches stattfinden. Vorzugsweise ist der Kennwert 3 jedoch in Form einer Summe aus den vorgenannten Teilkennwerten bestimmt. Die einzelnen Teilkennwerte können jedoch auch mit unterschiedlicher Gewichtung in die Aufsummierung einbezogen werden. Hierzu ist es vorstellbar, dass jeder Teilkennwert als Gewichtsfaktor einen ersten Gewichtsfaktor, der zweite Teilkennwert mit einem zweiten Gewichtsfaktor und ein dritter Teilkennwert mit einem dritten Gewichtsfaktor aufweist gemäß der Formel:

$$K = G1 * K1 + G2 * K2 + G3 * K3,$$

wobei die Werte K1 bis K3 die jeweiligen Teilwerte darstellen und die Faktoren G1 bis G3 (welche reelle positive Zahlen darstellen) jeweilig Gewichtsfaktoren der Teilkennwerte bezeichnen. Bei der hier vorgestellten Nutzungsobjektklassifikation kann es sich um einen rein optischen Vergleich zwischen dem mit einer obig genannten Kamera aufgenommenen Nutzungsobjekt 1 und einer in optischer Weise entsprechend hinterlegten Nutzungsobjektvorlage in einer Datenbank handeln.

Die Nutzungsobjektklassifikation wird insofern durchgeführt, als dass der Kennwert 3 mit zumindest einem in einer Datenbank der Verarbeitungseinheit 2 und/oder mit einer Datenbank einer externen CPU verglichen wird, und die Verarbeitungseinheit 2 und/oder die CPU und/oder der Nutzer selbst, ein dem Kennwert 3 entsprechendes Datenbankobjekt 4 auswählt und in einem Bildschirm 21 der Verarbeitungseinheit 2 darstellt, sodass ein Kamerabild des Nutzungsobjektes 1 zusammen mit dem Datenbankobjekt 4 zumindest teilweise optisch auf dem Bildschirm 21 überlagert und/oder nebeneinander dargestellt wird, insbesondere und weiter wobei eine Durchführung zumindest eines physikalischen Erfassungsvorgangs 5, zum Beispiel durch einen Nutzer und/oder einer Durchführungsvorrichtung, insbesondere zumindest einer Fotographie, des Nutzungsobjektes 1, sodass das Nutzungsobjekt 1 derart erfasst wird, dass eine durch den Erfassungsvorgang erfasste Abbildung des Nutzungsobjektes 1 identisch oder maßstabsskaliert identisch mit dem auf dem Bildschirm 21 dargestellten Datenbankobjekt 4 zeitgleich dargestellt wird, wobei

durch den Erfassungsvorgang das Nutzungsobjekt 1 von der Verarbeitungseinheit 2 und/oder der CPU und/oder dem Nutzer zumindest einer Nutzungsobjektklasse, zum Beispiel einem Fahrzeugtypen, zugeordnet wird.

In der Figur 2A ist ein beispielhafter erster Schritt dargestellt, wobei auf dem dort dargestellten Nutzungsobjekt 1, welches in Form eine Smartphones dargestellt ist, auf dem Bildschirm 21 eine Nutzungsobjektklasse (zum Beispiel die Bilder 30), insbesondere in Form eines Beispielfahrzeugtypen, optisch dargestellt ist. Der Beispielfahrzeugtyp ist nicht nur in verkleinerter Form im Bereich B1 auf dem Bildschirm 21 dargestellt, sondern auch in einer vergrößerten, beispielsweise einer 1:1 Form grau schattiert hinterlegt auf dem Bildschirm 21 (siehe Bereich B2) dargestellt.

Diese optisch dargestellte Nutzungsobjektklasse, also dieser dargestellte Fahrzeugtyp dient als Orientierung an dem zu fotografierenden Objekt. Dargestellt ist ebenso auch ein Regler 40, durch dessen Einstellen ein Kontrast und/oder eine Helligkeit des Orientierungsbildes, also insbesondere der Bilder 30, welche jeweils einer optischen Darstellung einer Nutzungsobjektklasse entsprechen, dargestellt. So können Probleme, die bei großer Helligkeit entstehen, eliminiert werden.

Dieses dreidimensionale Bild 30 ist dann ein Näherungsbild, welches durch die im Wesentlichen exakt abgebildeten zweidimensionalen Aufnahmen sowie durch bildliche Übergangsbereiche gebildet ist, wobei die Übergangsbereiche die zweidimensionalen Aufnahmen verbinden, sodass das dreidimensionale Bild 30 entsteht.

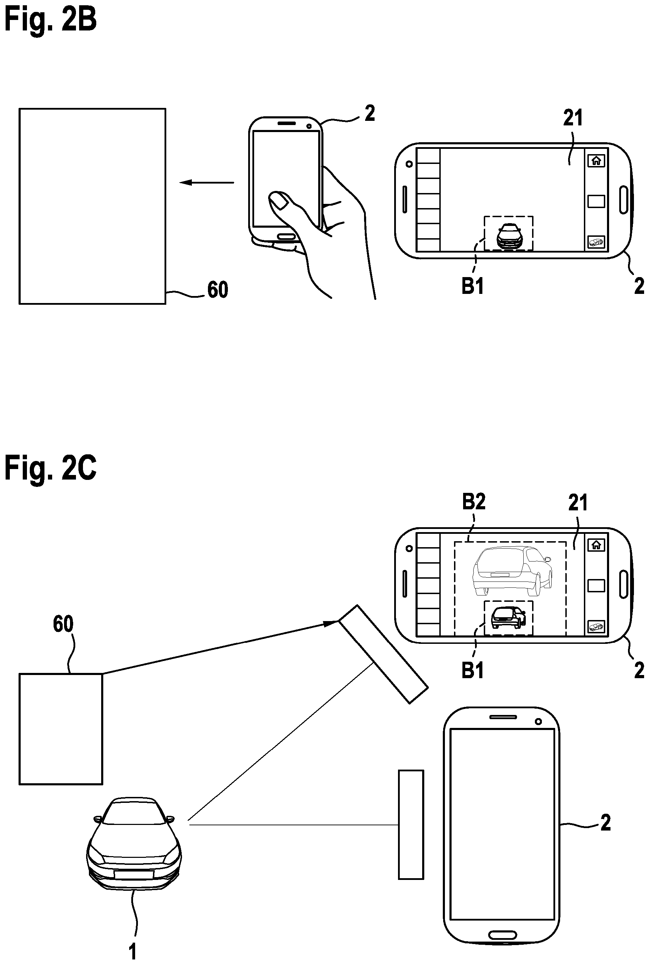

Die Figur 2B zeigt ein kennwertmäßiges Erfassen anhand einer Nutzungsplakette 50 des Nutzungsfahrzeuges. Hierbei wird die Nutzungsplakette 50 optisch durch die Verarbeitungseinheit 2 gescannt. Je nach zu fotografierendem Nutzungsobjekt 1 verändert sich der Winkel, in dem die Verarbeitungseinheit 2, vorliegend beispielhaft als ein Smartphone dargestellt, gehalten werden muss, wodurch eine optimale Qualität für den Vergleichs- und Einordnungsvorgang erzielt werden können.

In der Figur 2C ist in einer weiteren Darstellung dargestellt, dass die Verarbeitungseinheit 2 in verschiedenen Winkelstellungen relativ zum Nutzungsobjekt 1 gehalten werden muss. Das Obige stellt daher nicht nur den physikalischen Erfassungsvorgang 5 dar, sondern auch die eingangsbeschriebene kennwertmäßige Erfassung zur Nutzungsobjektklassifikation.

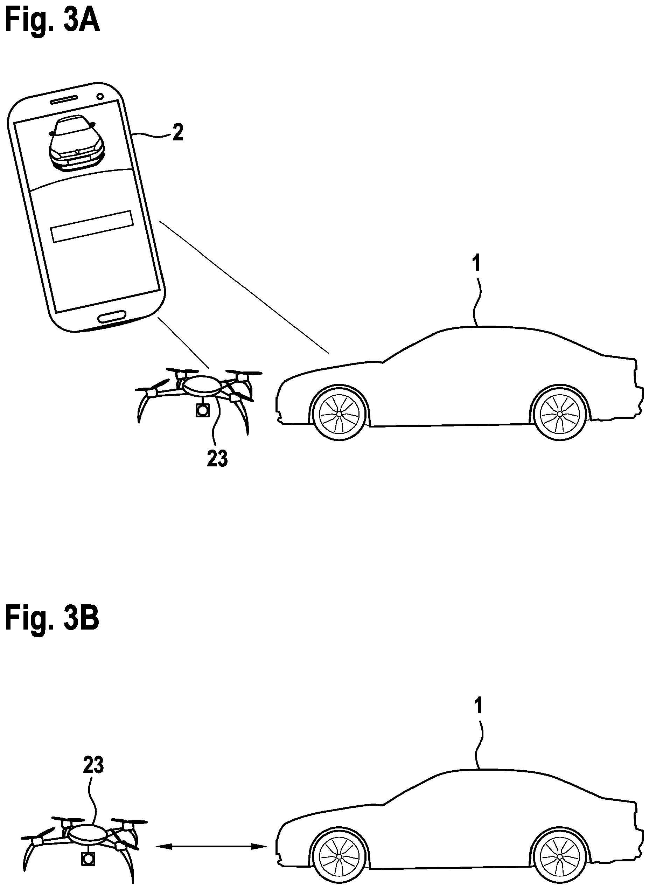

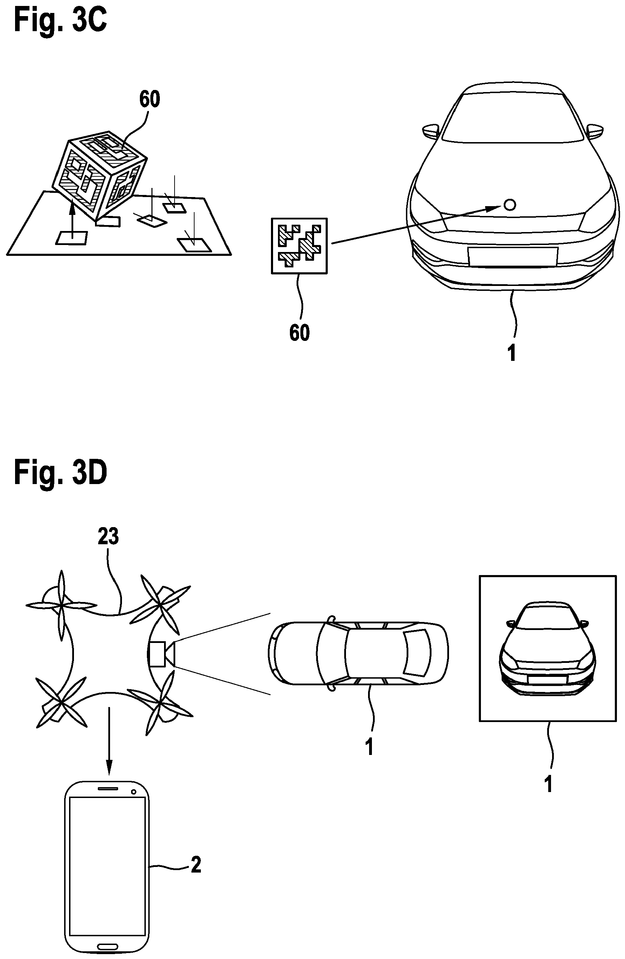

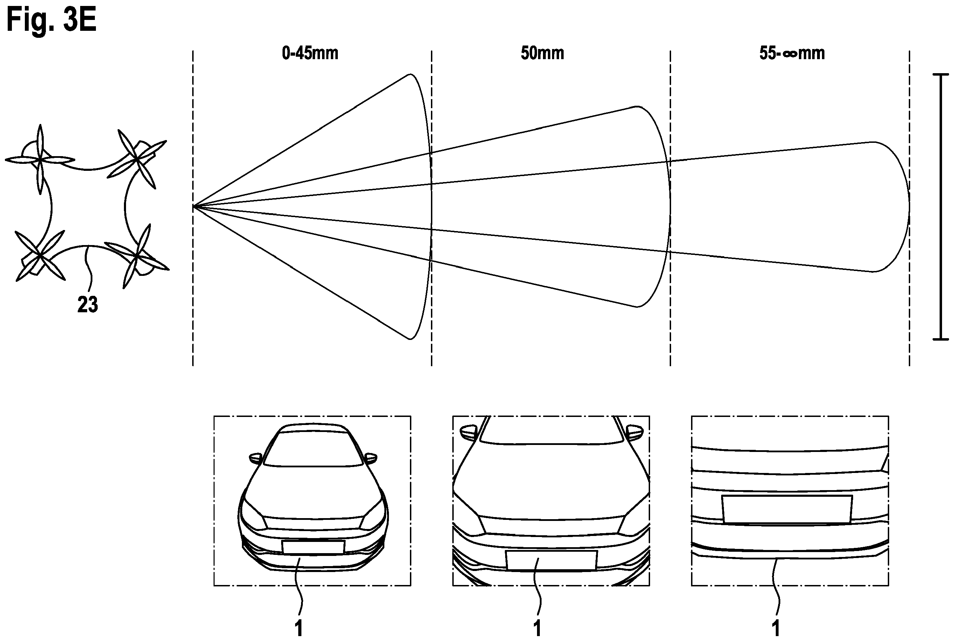

In den Figuren 3 ist in einer weiteren Ausführungsform dargestellt, dass die Verarbeitungseinheit 2 an einem Aufnahmeelement 23, vorliegend einer Drohne, befestigt ist, welches sich entsprechend den Vorgaben durch die Erfassungssequenz relativ zu dem Nutzungsobjekt 1 bewegt. Die Verarbeitungseinheit 2 kann sich daher mit dem Aufnahmeelement 23 zusammen entsprechend der Erfassungssequenz relativ zu dem Nutzungsobjekt 1 bewegen. Zwar kann in einem derartigen Fall die Verarbeitungseinheit 2 ein Smartphone oder eine Kamera sein oder umfassen und die Verarbeitungseinheit 2 kann trotzdem auch eine handhabbare Verarbeitungseinheit 2 sein. Dies ist jedoch an einer größeren Einheit, nämlich dem Aufnahmeelement 23 befestigt. Vorzugsweise umfasst das Aufnahmeelement 23 alle nötigen Komponenten, um sich vollautomatisch oder durch manuelle Kraft des Nutzers entlang des Nutzungsobjekts 1 bewegen zu lassen.

Gemäß zumindest einer Ausführungsform handelt es sich bei dem Aufnahmeelement 23 um eine Drohne, welche entsprechend der Erfassungssequenz relativ zu dem Nutzungsobjekt 1 gelenkt wird, um die einzelnen Aufnahmen vorzugsweise entlang oder an den oben genannten Markierungselementen 60 durchführen zu können

Die Figur 3A stellt daher nicht nur eine Drohne 23, sondern ebenso wiederum die Verarbeitungseinheit 2 und das Nutzungsobjekt 1 dar, wobei eine Drohne 23 bei einem Drohnenstart zunächst einen Abstand in die Verarbeitungseinheit 2 vorher eingegeben wird oder von der Erfassungssequenz vorgegeben wird.

Zum Beispiel erfasst die Erfassungssequenz eine Anleitung an eine Durchführungsvorrichtung und/oder an einen Nutzer, das Nutzungsobjekt 1 unter verschiedenen Winkeln, verschiedenen Abständen mit verschiedenen Farbkontrasten oder ähnlichem zu fotografieren, um eine Identifikation mit einem in der Datenbank hinterlegten Nutzungsobjekt 1 zu vereinfachen.

Bevor sich daher die Drohne automatisiert und ohne Drohnenpilot orientieren kann, benötigt diese daher nämlich Informationen zum Nutzungsobjekt 1. Anschließend kann die Drohne mit definiertem Abstand vor das Fahrzeug 11 gelegt werden (siehe Figur 3B), um mit Hilfe der Fahrzeugabmessungen jeweils bezogen auf den Startpunkt alle Positionen entsprechend der Erfassungssequenz abfliegen. In der Figur 3C sind entsprechende Markierungselemente 60 dargestellt, welche entweder auf dem Nutzungsobjekt 1 angebracht sind oder virtuell optisch "darübergelegt" werden.

Derartige Markierungselemente 60 können daher auch passive Bauelemente sein. Denkbar ist jedoch auch, dass solche Markierungselemente 60 lösbar auf das Nutzungsobjekt 1 aufgebracht, zum Beispiel aufgeklebt werden können. Solche Nutzungsobjekte 1 können eine eigene Energieversorgung, beispielsweise eine Batterieversorgung, aufweisen. Solche mit einer Batterie versehenden Markierungselemente 60 können im optisch sichtbaren oder im unsichtbaren, zum Beispiel Infrarot- oder Mikrowellenbereich elektromagnetische Strahlen aussenden, welche von einem Ortungselement der Verarbeitungseinheit 2 detektiert werden können und wodurch die Verarbeitungseinheit 2 dazu in der Lage ist, festzustellen, in welcher Position es sich relativ zu dem Nutzungsobjekt 1 befindet.

Alternativ oder zusätzlich ist jedoch auch vorstellbar, dass die Markierungselemente 60 virtuelle Markierungselemente 60 sind, welche aus der Datenbank geladen werden und welche ebenso wie das Nutzungsobjekt 1 selbst aus der Datenbank als Bild 30, beispielsweise als ein drittes Bild 30 zusammen mit einer Fotografie des Nutzungsobjekts 1 und dementsprechend virtuell aus der Datenbank geladenen Erscheinung des Nutzungsobjekts 1 auf dem Bildschirm 21 des Nutzungsobjektes 1 dargestellt werden, können daher ebenso wie die Datenbankobjekte 4 (welche die Nutzungsobjekte 1 in virtueller Hinsicht abbilden können und welche in der Datenbank gespeichert sind), ebenso als weitere Datenbankobjekte 4 in der Datenbank der Verarbeitungseinheit 2 und/oder der externen CPU hinterlegt sein. Zum Beispiel kann mit ein und demselben Kennwert 3 sowohl das Nutzungsobjekt 1) also auch das weitere Datenbankobjekt 4 (zumindest ein Markierungselement 60) gemeinsam in die Verarbeitungseinheit 2 geladen und/oder auf dem Bildschirm 21 der Verarbeitungseinheit 2 dargestellt werden.

Bei dem Markieren kann es sich um sogenannte ARUCo-Markierung handeln. Dabei kann es sich um kontrastreiche Symbole handeln, welche speziell für Kameraanwendung entwickelt wurde. Diese können nicht nur Orientierungshelfer, sondern auch Informationen beinhalten. Mit einem solchen Marker kann daher die Drohne 23 den Startpunkt des Drohnenflugs selbst erkennen.

In der Figur 3D ist ein weiterer Ablauf des Drohnenflugs gezeigt, was ebenso aus der Figur 3E hervorgeht. In der Figur 3E ist jedoch zusätzlich optisch dargestellt, wie sich eine Brennweite einer Linse, der von der Drohne 23 transportierten Verarbeitungseinheit 2, auf die Aufnahmequalität auswirkt. Auf dem ganz links dargestellten Nutzungsobjekt 1 wurde dieses mit einer Weitwinkelkamera aufgenommen, während das in der Mitte dargestellte Nutzungsobjekt 1 mit einer Normalwinkelkamera und das Nutzungsobjekt 1 ganz rechts mit einer Telekamera aufgenommen wurde. Die Weitwinkelkamera kann einen Abstand von 0 bis 45 mm zum Nutzungsfahrzeug 2 erlauben, die Normalwinkelkamera einen Abstand von etwa 50 mm und ein Teleobjektiv kann einen Abstand ab 55 mm erlauben.

Anhand natürlicher Punkte, wie beispielsweise den Ecken oder Ränder des Nutzungsobjektes 1, und mindestens einer bekannten Strecke, wie etwa einer Wandlänge, kann ein Koordinatensystem definiert werden. Verfügen die Bilder 30 über GPS-Informationen, wie bei Fotos von Drohnen, kann die Definition des Koordinatensystems durch die Georeferenzierung gänzlich automatisch geschehen.

Anschließend besteht die Möglichkeit die Punktwolke noch in ihrer Randbegrenzungen zu definieren. Somit stören keine unnötigen Elemente, welche zum Beispiel im Hintergrund der Fotos zu sehen waren, bei der weiteren Nutzung der Punktwolke. Diese Abgrenzungen sind vergleichbar mit einer Clipping-Box.

Brennweiten von kleiner 50 mm und größer 50 mm können nämlich unterschiedliche Verzerrungs- und Verzeichnungseffekte erzeugen. Durch die verschiedentliche Verwendung von Brennweiten von beispielsweise 6 mm treten bei den aufgenommenen Bildern 30 somit sichtbare Verzerrungen auf, um einen Vergleich aller Bilder 30 im Anschluss zu haben, sollte eine Nachbearbeitung der aufgenommenen Fotografien nicht erfolgen, sodass die oben genannten verschiedenen Objektive zur Anwendung kommen müssen.

Die Erfindung ist nicht anhand der Beschreibung und der Ausführungsbeispiele beschränkt, vielmehr erfasst die Erfindung jedes neue Merkmal sowie jede Kombination von Merkmalen, was auch insbesondere jede Kombination der Patentansprüche beinhaltet, auch wenn dieses Merkmal oder diese Kombination selbst nicht explizit in den Patentansprüchen oder den Ausführungsbeispielen wiedergegeben ist.

## Bezugszeichenliste

| | |
|---|---|
| 1 | Nutzungsobjekt |
| 2 | Verarbeitungseinheit |
| 3 | Kennwert |
| 4 | Datenbankobjekt |
| 5 | physikalischer Erfassungsvorgang |
| 7 | Implementierungsvorrichtung |
| 11 | Identifikationsmittel |
| 21 | Bildschirm |
| 23 | Aufnahmeelement (Drohne) |
| 30 | Bilder |
| 40 | Regler |
| 50 | Nutzungsplakette |
| 60 | Markierungselemente |
| B1 | Bereich |
| B2 | Bereich |
| 100 | Sensorvorrichtung |
| 1000 | Sensorverfahren |

## Patentansprüche

1. Sensorverfahren (1000) zum physikalischen, insbesondere zum optischen, Erfassen zumindest eines Nutzungsobjektes (1), insbesondere zur Detektion einer Umgebung zur Erzeugung, insbesondere eines Sicherheitsabstandes zwischen Objekten, umfassend die folgenden Schritte:

   - Bereitstellen des Nutzungsobjektes (1),
   - Durchführung zumindest zweier optischer, insbesondere zweidimensionaler, Sensor-Aufnahmen des Nutzungsobjekts (1), wobei die Aufnahmen aus jeweils unterschiedlichen Winkeln und/oder unterschiedlichen Positionen relativ zum Nutzungsobjekt (1) geschossen werden, sodass eine Nutzungsobjektbildsammlung des Nutzungsobjekts (1) entsteht,
   - **dadurch gekennzeichnet, dass** ausgehend von der Nutzungsobjektbildsammlung und unter Verwendung der optischen Aufnahmen durch eine Implementierungsvorrichtung (7) zumindest ein, dreidimensionales Bild des Nutzungsobjekts (1), beispielsweise auch von dessen Umgebung, erzeugt wird, insbesondere wobei in einem weiteren Schritt ein Bereitstellen zumindest einer Verarbeitungseinheit (2), mittels welcher das Nutzungsobjekt (1) und/oder ein dem Nutzungsobjekt (1) eindeutig, vorzugsweise eineindeutig, zugeordnetes Identifikationsmittel (11) physikalisch erfasst wird, woraus zumindest ein Kennwert (3) des Nutzungsobjektes (1) gewonnen wird, insbesondere sodass der Sicherheitsabstand zwischen zwei benachbarten Objekten, insbesondere Nutzungsobjekten (1), eingehalten wird.

2.  Sensorverfahren (1000) nach Anspruch 1,
    **dadurch gekennzeichnet, dass**
    das dreidimensionale Bild ein Näherungsbild ist, welches durch die im Wesentlichen exakt abgebildeten zweidimensionalen Aufnahmen sowie durch bildliche Übergangsbereiche gebildet ist, wobei die Übergangsbereiche die zweidimensionalen Aufnahmen verbinden, sodass das dreidimensionale Bild entsteht.

3.  Sensorverfahren (1000) nach zumindest einem der vorhergehenden Ansprüche,
    **dadurch gekennzeichnet, dass**
    die Übergangsbereiche in optischer Hinsicht eine pixelartige (Misch-)Darstellung zweier unmittelbar benachbarter Randbereiche der zweidimensionalen Aufnahmen sind.

4.  Sensorverfahren (1000) nach zumindest einem der vorhergehenden Ansprüche,
    **dadurch gekennzeichnet, dass**
    ein Übergangsbereich als scharf abgrenzbare Trennlinie zwischen den beiden zweidimensionalen Aufnahmen ausgebildet ist.

5.  Sensorverfahren (1000) nach zumindest einem der vorhergehenden Ansprüche,
    **dadurch gekennzeichnet, dass**
    jede zweidimensionale Aufnahme in einzelne Daten, vorzugsweise Datenklassen, zerlegt wird, und anhand dieser Datenklassenerzeugung, die Datenklassen zu dem dreidimensionalen Bild zusammengesetzt werden, insbesondere mittels einer KI-Maschine.

6.  Sensorverfahren (1000) nach zumindest einem der vorhergehenden Ansprüche,
    **dadurch gekennzeichnet, dass**
    die Datenklassen zu Datenklassenpunktwolken zusammengesetzt werden, um so das dreidimensionale Bild zu erzeugen.

7.  Sensorverfahren (1000) nach zumindest einem der vorhergehenden Ansprüche
    **dadurch gekennzeichnet, dass**

    - die Nutzungsobjektklassifikation insofern durchgeführt wird, als dass der Kennwert (3) mit zumindest einem in einer Datenbank der Verarbeitungseinheit (2) und/oder mit einer Datenbank einer externen CPU verglichen wird, und die Verarbeitungseinheit (2) und/oder die CPU und/oder der Nutzer selbst, ein dem Kennwert (3) entsprechendes Datenbankobjekt (4) auswählt und in einem Bildschirm (21) der Verarbeitungseinheit (2) darstellt, sodass ein Kamerabild des Nutzungsobjektes (1) zusammen mit dem Datenbankobjekt (4) zumindest teilweise optisch auf dem Bildschirm (21) überlagert und/oder nebeneinander dargestellt wird, insbesondere und weiter wobei
    eine Durchführung zumindest eines physikalischen Erfassungsvorgangs (5), zum Beispiel durch einen Nutzer und/oder einer Durchführungsvorrichtung, insbesondere zumindest einer Fotographie, des Nutzungsobjektes (1), sodass das Nutzungsobjekt (1) derart erfasst wird, dass eine durch den Erfassungsvorgang erfasste Abbildung des Nutzungsobjektes (1) identisch oder maßstabsskaliert identisch mit dem auf dem Bildschirm (21) dargestellten Datenbankobjekt (4) zeitgleich dargestellt wird, wobei durch den Erfassungsvorgang das Nutzungsobjekt (1) von der Verarbeitungseinheit (2) und/oder der CPU und/oder dem Nutzer zumindest einer Nutzungsobjektklasse, zum Beispiel einem Fahrzeugtypen, zugeordnet wird.

8.  Sensorverfahren (1000) nach zumindest einem der vorhergehenden Ansprüche,

    **dadurch gekennzeichnet, dass**
    der physikalische Erfassungsvorgang (5) zumindest eine zeitliche Erfassungssequenz umfasst, wobei während der Erfassungssequenz zumindest zwei verschiedene Aufnahmen des Nutzungsobjektes (1) durchgeführt werden, wobei jeder Aufnahme zumindest ein Datenbankobjekt (4) zugeordnet ist.

9.  Sensorverfahren (1000) nach zumindest einem der vorhergehenden Ansprüche,
    **dadurch gekennzeichnet, dass**

    nach der kennwertmäßigen Erfassung und zur Nutzungsobjektklassifikation auf dem Bildschirm (21) zumindest eine zeitlich sequentielle Erfassungsanleitung der zeitlichen Erfassungssequenz zur Erfassung der zumindest zwei Aufnahmen abgefahren wird.

10. Sensorvorrichtung (100) zum physikalischen, insbesondere zum optischen, Erfassen zumindest eines Nutzungsobjektes (1), insbesondere zur Detektion einer Umgebung zur Erzeugung, insbesondere eines Sicherheitsabstandes zwischen Objekten, umfassend:

- Bereitstellen des Nutzungsobjektes (1),
- Zumindest eine Aufnahmeeinheit zur Durchführung zumindest zweier optischer, insbesondere zweidimensionaler, Sensor-Aufnahmen des Nutzungsobjekts (1), wobei die Aufnahmen aus jeweils unterschiedlichen Winkeln und/oder unterschiedlichen Positionen relativ zum Nutzungsobjekt (1) geschossen sind, sodass eine Nutzungsobjektbildsammlung des Nutzungsobjekts (1) entsteht,
- **dadurch gekennzeichnet, dass**

mittels einer Implementierungsvorrichtung (7) ausgehend von der Nutzungsobjektbildsammlung und unter Verwendung der optischen Aufnahmen zumindest ein, dreidimensionales Bild des Nutzungsobjekts (1), beispielsweise auch von dessen Umgebung, erzeugbar ist, insbesondere wobei mittels einer Verarbeitungseinheit (2) mittels welcher das Nutzungsobjekt (1) und/oder ein dem Nutzungsobjekt (1) eindeutig, vorzugsweise eineindeutig, zugeordnetes Identifikationsmittel (11) physikalisch erfassbar ist, woraus zumindest ein Kennwert (3) des Nutzungsobjektes (1) gewinnbar ist, insbesondere sodass der Sicherheitsabstand zwischen zwei benachbarten Objekten, insbesondere Nutzungsobjekten (1), einhaltbar ist.


**Geänderte Patentansprüche gemäss Regel 137(2) EPÜ.**

1. Sensorverfahren (1000) zum physikalischen, insbesondere zum optischen, Erfassen eines Nutzungsobjektes (1), insbesondere zur Detektion einer Umgebung zur Erzeugung, insbesondere eines Sicherheitsabstandes zwischen Objekten, umfassend die folgenden Schritte:

- Bereitstellen des Nutzungsobjektes (1),
- Durchführung zumindest zweier optischer, insbesondere zweidimensionaler, Sensor-Aufnahmen des Nutzungsobjekts (1), wobei die Aufnahmen aus jeweils unterschiedlichen Winkeln und/oder unterschiedlichen Positionen relativ zum Nutzungsobjekt (1) geschossen werden, sodass eine Nutzungsobjektbildsammlung des Nutzungsobjekts (1) entsteht,
- **dadurch gekennzeichnet, dass**

ausgehend von der Nutzungsobjektbildsammlung und unter Verwendung der optischen Aufnahmen durch eine Implementierungsvorrichtung (7) zumindest ein, dreidimensionales Bild des Nutzungsobjekts (1), beispielsweise auch von dessen Umgebung, erzeugt wird, insbesondere wobei in einem weiteren Schritt ein Bereitstellen zumindest einer Verarbeitungseinheit (2), mittels welcher das Nutzungsobjekt (1) physikalisch erfasst wird, woraus zumindest ein Kennwert (3) des Nutzungsobjektes (1) gewonnen wird, wobei

es sich bei dem Kennwert um eine reelle Zahl größer 0 handelt, oder es sich der Kennwert aus verschiedenen Teilkennwerten zusammensetzt. sodass hierbei ein Nutzungsobjekt im Hinblick auf eine Außenfarbe einen Teilkennwert aufweist, im Hinblick auf Maximalabmessungen in Höhe und Breite und/oder Tiefe einen weiteren Kennwert, sowie in Hinblick auf Gewicht einen weiteren Teilkennwert des Nutzungsobjekts abbildet, sodass daher ein solcher Kennwert durch die Kombination dieser drei Teilkennwerte gebildet ist, und diese Kombination in Form einer Summe oder eines Bruches stattfindet, wobei der physikalische Erfassungsvorgang (5) zumindest eine zeitliche Erfassungssequenz umfasst, wobei während der Erfassungssequenz zumindest zwei verschiedene Aufnahmen des Nutzungsobjektes (1) durchgeführt werden, wobei jeder Aufnahme zumindest ein Datenbankobjekt (4) zugeordnet ist.

2. Sensorverfahren (1000) nach Anspruch 1,
**dadurch gekennzeichnet, dass**
das dreidimensionale Bild ein Näherungsbild ist, welches durch die im Wesentlichen exakt abgebildeten zweidimensionalen Aufnahmen sowie durch bildliche Übergangsbereiche gebildet ist, wobei die Übergangsbereiche die zweidimensionalen Aufnahmen verbinden, sodass das dreidimensionale Bild entsteht.

3. Sensorverfahren (1000) nach zumindest einem der vorhergehenden Ansprüche,
**dadurch gekennzeichnet, dass**
ein Übergangsbereich als scharf abgrenzbare Trennlinie zwischen den beiden zweidimensionalen Aufnahmen ausgebildet ist.

4. Sensorverfahren (1000) nach zumindest einem der vorhergehenden Ansprüche
**dadurch gekennzeichnet, dass**

- die Nutzungsobjektklassifikation insofern durchgeführt wird, als dass der Kennwert (3) mit zumindest einem in einer Datenbank der Verarbeitungseinheit (2) und/oder mit einer Datenbank einer externen CPU verglichen wird, und die Verarbeitungseinheit (2) und/oder die CPU und/oder der Nutzer selbst, ein dem Kennwert (3) entsprechendes Datenbankobjekt (4) auswählt und in einem Bildschirm (21) der Verarbeitungseinheit (2) darstellt, sodass ein Kamerabild des Nutzungsobjektes (1) zusammen mit dem Datenbankobjekt (4) zumindest teilweise optisch auf dem Bildschirm (21) überlagert und/oder nebeneinander dargestellt wird, insbesondere und weiter wobei

eine Durchführung zumindest eines physikalischen Erfassungsvorgangs (5), zum Beispiel durch einen Nutzer und/oder einer Durchführungsvorrichtung, insbesondere zumindest einer Fotographie, des Nutzungsobjektes (1), sodass das Nutzungsobjekt (1) derart erfasst wird, dass eine durch den Erfassungsvorgang erfasste Abbildung des Nutzungsobjektes (1) identisch oder maßstabsskaliert identisch mit dem auf dem Bildschirm (21) dargestellten Datenbankobjekt (4) zeitgleich dargestellt wird, wobei

durch den Erfassungsvorgang das Nutzungsobjekt (1) von der Verarbeitungseinheit (2) und/oder der CPU und/oder dem Nutzer zumindest einer Nutzungsobjektklasse, zum Beispiel einem Fahrzeugtypen, zugeordnet wird.

5. Sensorvorrichtung (100) zum physikalischen, insbesondere zum optischen, Erfasseneines Nutzungsobjektes (1), insbesondere zur Detektion einer Umgebung zur Erzeugung, insbesondere eines Sicherheitsabstandes zwischen Objekten, umfassend:

- Bereitstellen des Nutzungsobjektes (1),
- Zumindest eine Aufnahmeeinheit zur Durchführung zumindest zweier optischer, insbesondere zweidimensionaler, Sensor-Aufnahmen des Nutzungsobjekts (1), wobei die Aufnahmen aus jeweils unterschiedlichen Winkeln und/oder unterschiedlichen Positionen relativ zum Nutzungsobjekt (1) geschossen sind, sodass eine Nutzungsobjektbildsammlung des Nutzungsobjekts (1) entsteht,
- **dadurch gekennzeichnet, dass**

mittels einer Implementierungsvorrichtung (7) ausgehend von der Nutzungsobjektbildsammlung und unter Verwendung der optischen Aufnahmen zumindest ein, dreidimensionales Bild des Nutzungsobjekts (1), beispielsweise auch von dessen Umgebung, erzeugbar ist, insbesondere wobei mittels einer Verarbeitungseinheit (2) mittels welcher das Nutzungsobjekt (1) physikalisch erfassbar ist, woraus zumindest ein Kennwert (3) des Nutzungsobjektes (1) gewinnbar ist, wobei

es sich bei dem Kennwert um eine reelle Zahl größer 0 handelt, oder es sich der Kennwert aus verschiedenen Teilkennwerten zusammensetzt. sodass hierbei ein Nutzungsobjekt im Hinblick auf eine Außenfarbe einen Teilkennwert aufweist, im Hinblick auf Maximalabmessungen in Höhe und Breite und/oder Tiefe einen weiteren Kennwert, sowie in Hinblick auf Gewicht einen weiteren Teilkennwert des Nutzungsobjekts abbildet, sodass daher ein solcher Kennwert durch die Kombination dieser drei Teilkennwerte gebildet ist, und diese Kombination in Form einer Summe oder eines Bruches stattfindet, wobei der physikalische Erfassungsvorgang (5) zumindest eine zeitliche Erfassungssequenz umfasst, wobei während der Erfassungssequenz zumindest zwei verschiedene Aufnahmen des Nutzungsobjektes (1) durchgeführt werden, wobei jeder Aufnahme zumindest ein Datenbankobjekt (4) zugeordnet ist.

Fig. 1

100

1000

7

23

2

2,21

4

1

3

5

Fig. 2A

B2   40   21

2

B1   41

# Fig. 2B

# Fig. 2C

## Fig. 3A

## Fig. 3B

**Fig. 3C**

**Fig. 3D**

# Fig. 3E

EP 3 989 107 A1

Europäisches
Patentamt

European
Patent Office

Office européen
des brevets

**EUROPÄISCHER RECHERCHENBERICHT**

Nummer der Anmeldung

EP 20 20 9088

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | XIAOFENG LIU ET AL: "An Approach of Traffic Accident Scene Reconstruction Using Unmanned Aerial Vehicle Photogrammetry", SENSORS, SIGNAL AND IMAGE PROCESSING, ACM, 2 PENN PLAZA, SUITE 701NEW YORKNY10121-0701USA, 8. Oktober 2019 (2019-10-08), Seiten 31-34, XP058447672, DOI: 10.1145/3365245.3365247 ISBN: 978-1-4503-7243-5 * Zusammenfassung * * Seite 31 - Seite 33 * * Abbildungen 1-4 * ----- | 1-10 | INV. G06K9/00 |
| A | EP 3 726 425 A1 (GARCIA MARKUS [CH]; ZELLWEGER THOMAS [CH]) 21. Oktober 2020 (2020-10-21) * Zusammenfassung * * Absatz [0002] - Absatz [0009] * * Absatz [0012] - Absatz [0021] * * Absatz [0027] - Absatz [0044] * * Absatz [0051] - Absatz [0079] * ----- | 1-10 | RECHERCHIERTE SACHGEBIETE (IPC)  G06K |

Der vorliegende Recherchenbericht wurde für alle Patentansprüche erstellt

| Recherchenort | Abschlußdatum der Recherche | Prüfer |
|---|---|---|
| Den Haag | 30. April 2021 | Karwe, Markus |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 20 9088

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2021

| Im Recherchenbericht angeführtes Patentdokument | Datum der Veröffentlichung | Mitglied(er) der Patentfamilie | Datum der Veröffentlichung |
|---|---|---|---|
| EP 3726425 A1 | 21-10-2020 | CN 111835965 A<br>EP 3726425 A1<br>US 2020334288 A1 | 27-10-2020<br>21-10-2020<br>22-10-2020 |

EPO FORM P0461

Für nähere Einzelheiten zu diesem Anhang : siehe Amtsblatt des Europäischen Patentamts, Nr.12/82